## Europäisches Patentamt

## European Patent Office

## Office européen des brevets

(11) Veröffentlichungsnummer: **0 235 678**

**A1**

# (12) EUROPÄISCHE PATENTANMELDUNG

(21) Anmeldenummer: **87102319.8**

(22) Anmeldetag: **18.02.87**

(51) Int. Cl.⁴: **G08G 1/09**

(30) Priorität: **21.02.86 DE 3605681**

(43) Veröffentlichungstag der Anmeldung:
**09.09.87 Patentblatt 87/37**

(84) Benannte Vertragsstaaten:
**AT DE FR GB IT NL SE**

(71) Anmelder: **Siemens Aktiengesellschaft Berlin und München**
**Wittelsbacherplatz 2**
**D-8000 München 2(DE)**

(72) Erfinder: **Kappeller, Reinhard, Dipl.-Ing. (FH)**
**Geigenbergerstrasse 27**
**D-8000 München 71(DE)**
Erfinder: **Engelmann, Gottfried, Ing. grad.**
**Pfaffenleite 16**
**D-8021 Icking(DE)**

(54) **Sende- und Empfangseinrichtung zum Einbau in ein Fahrzeug.**

(57) Eine Sende-und Empfangseinrichtung zur Datenübertragung mittels Infrarotstrahlung zum Einbau in ein Kraftfahrzeug besitzt ein unsymmetrisch gestaltetes Gehäuse (9, 10), wodurch ein Empfängerbereich mit größerer Tiefe und ein Senderbereich mit geringerer Tiefe geschaffen wird. Im Empfängerbereich sind Empfangsdioden (17) in der Nähe der Gehäuserückseite, im Senderbereich sind Sendedioden (23) unmittelbar an der Gehäusefrontseite angeordnet. Dadurch ist die Sende-und Empfangseinrichtung (SE) unter guter Raumausnutzung hinter einem schräg gestellten Innenrückspiegel (2) eines Kraftfahrzeuges zu montieren. Außerdem wird durch die Anordnung der Empfangsdioden (17) im hinteren Bereich des tiefen Gehäuseteils eine störende Einstrahlung von Sonnenlicht vermieden, so daß eine gefahrenträchtige und zusätzlichen Raum beanspruchende äußere Sonnenblende nicht erforderlich ist.

FIG 1

## Sende-und Empfangseinrichtung zum Einbau in ein Fahrzeug

Die Erfindung betrifft eine Sende-und Empfangseinrichtung für die Informationsübertragung mittels Lichtstrahlung zum Einbau hinter der Frontscheibe eines Fahrzeuges, wobei in einem gemeinsamen Gehäuse Sende-und Empfangsdioden mit Strahlungsrichtung zu einer lichtdurchlässigen Frontwand angeordnet sind. Insbesondere betrifft die Erfindung ein Gerät zur Datenübertragung mittels Infrarotstrahlung.

In der DE-OS 32 48 544 ist ein System zur Informationsübertragung mittels Infrarotstrahlung beschrieben, bei dem ein Dialog zwischen einem Fahrzeugrechner und einem in einer Zentrale angeordneten Großrechner über Sende-und Empfangseinrichtungen des Fahrzeugs sowie ortsfeste Baken geführt wird. Bei einem derartigen Fahrzeugleitsystem sind beispielsweise die ortsfesten Baken in unmittelbarer Nähe der üblichen Lichtsignalgeber angeordnet. Das bedeutet, daß die Sende-und Empfangseinrichtung im Fahrzeug über den gleichen Sichtkontakt zur Bake verfügen muß wie der Fahrzeuglenker zum Lichtsignal. Dieser Sichtkontakt zur Bake für die Infrarotübertragung kann optimal hergestellt werden, wenn die Sende-und Empfangseinrichtung zwischen dem Innenrückspiegel des Fahrzeugs und der Frontscheibe eingebaut wird. In diesem Bereich ist die Frontscheibe durch den Scheibenwischer leicht zu reinigen und damit für die Signalübertragung mittels Lichtstrahlung gut durchlässig; die Sende-und Empfangseinrichtung ist durch die Frontscheibe außerdem geschützt untergebracht.

Soweit Sende-und Empfangsgeräte für Infrarotübertragung für andere Zwecke bereits existieren, können sie nicht ohne weiteres zwischen Frontscheibe und Innenrückspiegel eingebaut werden, weil sie für den verfügbaren Platz zu groß sind und evtl. auch das Gesichtsfeld des Fahrzeuglenkers zu sehr beeinträchtigen. Bei herkömmlichen Infrarotgeräten sind außerdem sowohl die Sende-als auch die Empfangsdioden unmittelbar an der Frontseite angeordnet, so daß die Empfangsdioden beim Einsatz hinter der Frontscheibe eines Kraftfahrzeuges häufig einer unerwünschten Störstrahlung durch einfallendes Sonnenlicht ausgesetzt wären. Um dies zu vermeiden, wurde bereits vorgeschlagen, am Gehäuse vor den Empfangsdioden eine Sonnenblende anzubringen. Dies hat jedoch den Nachteil, daß einerseits die Geräteabmessungen dadurch weiter vergrößert werden und daß andererseits von der - scharfkantigen Sonnenblende (Schute) eine nicht unerhebliche Verletzungsgefahr bei Unfällen ausgeht.

Aufgabe der Erfindung ist es, eine Sende-und Empfangseinrichtung der eingangs genannten Art zu schaffen, die einfach im konstruktiven Aufbau ist und speziell für den Einbau zwischen Frontscheibe und Innenrückspiegel des Fahrzeugs geeignet ist, also möglichst wenig Platz beansprucht und den verfügbaren Platz möglichst gut ausnutzt, dabei aber das Gesichtsfeld des Fahrers möglichst wenig beeinträchtigt. Zu der Anpassung an den Verwendungszweck im Fahrzeug gehört dabei auch, daß die Einstellung des Innenrückspiegels nicht behindert wird, daß die Sonneneinstrahlung zu den Empfangsdioden weitgehend ausgeschaltet wird und daß das Gerät insgesamt möglichst wenig Verletzungsgefahren bei einem Unfall mit sich bringt.

Erfindungsgemäß wird diese Aufgabe dadurch gelöst, daß das Gehäuse mit einer im wesentlichen gerade verlaufenden Frontseite und einer asymmetrisch mit unterschiedlichem Abstand zur Frontseite verlaufenden Rückseite zwei neben einander liegende Bereiche unterschiedlicher Tiefe bildet, daß in dem Bereich mit der größeren Tiefe die Empfangsdioden in der Nähe der Gehäuserückseite angeordnet sind und daß in dem Bereich mit der geringeren Tiefe die Sendedioden in der Nähe der Gehäusefrontseite angeordnet sind.

Durch den erfindungsgemäßen konstruktiven Aufbau der Sende-und Empfangseinrichtung wird diese optimal an die Verwendung im Fahrzeug angepaßt. Dabei ist der asymmetrische Gehäuseaufbau in mehrfacher Hinsicht von Vorteil. Zum einen kann das Gerät im Fahrzeug hinter dem Innenrückspiegel so angeordnet werden, daß der weniger tiefe Gehäuseteil mit seiner vorzugsweise abgeschrägten Rückseite bezüglich der Fahrzeuglängsachse an der Seite des Fahrzeugführers angeordnet ist. Da der Innenrückspiegel zum Fahrzeugführer hin verschwenkt wird, kann auf diese Weise der erforderliche Schwenkbereich erhalten werden, wobei gleichzeitig ein möglichst großer Einbauraum für das Sende-und Empfangsgerät ausgenutzt wird. Das Gerät wird auf diese Weise durch den Spiegel auch weitgehend abgedeckt, so daß der Fahrzeugführer in seinem Gesichtsfeld praktisch nicht beeinträchtigt ist. Zum anderen bringt der asymmetrische Aufbau des Gehäuses auch in der Funktion den Vorteil mit sich, daß die Empfangsdioden im Gehäuseinnenraum in einem großen Abstand zur Frontseite angeordnet werden können, so daß das Gehäuse selbst als Schute oder Sonnenblende wirkt und den Einfall von Störlicht auf die Empfangsdioden weitgehend verhindert.

Die Sendedioden andererseits sind unmittelbar an der Frontseite des Gehäuses in dem weniger tief ausgelegten Bereich angeordnet, wobei aber hinter ihnen immer noch genügend Platz für den Einbau von elektronischen Bauelementen für die Senderschaltung verbleibt. Die Sendedioden sind dabei zweckmäßigerweise in mindestens zwei übereinanderliegenden Reihen angeordnet, wobei die Dioden der unterschiedlichen Reihen auch in unterschiedlichem Winkel zur Fahrzeuglängsachse ausgerichtet sein können. Dies ist dann erforderlich, wenn zum Zweck einer besseren Übertragungssicherheit ortsfeste Empfänger an beiden Straßenseiten angeordnet sind, um die Übertragung auch dann sicherzustellen, wenn eine der Strecken durch ein Hindernis, wie z. B. ein hohes Fahrzeug auf der Nachbarspur, unterbrochen wird. Alle Sendedioden der zwei oder auch von mehr übereinanderliegenden Reihen können auf einer gemeinsamen Leiterplatte angeordnet und kontaktiert sein, wobei diese Leiterplatte zweckmäßigerweise auch die Empfangsdioden und die übrigen elektronischen Bauelemente des Senders und des Empfängers aufnimmt. Die Leiterplatte ist in diesem Fall an die Innenkonturen des Gehäuses angepaßt und erstreckt sich über den gesamten Innenraum.

Wie erwähnt, wirkt durch den Einbau der Empfangsdioden im hinteren Bereich des tieferen Gehäusebereiches dieses Gehäuse bereits selbst als Sonnenblende. Zusätzlich können aber in dem Gehäuseraum vor den Empfangsdioden etwa waagrecht angeordnete Lamellen vorgesehen sein, die das schräg von oben einfallende Sonnenlicht auffangen. Die Oberseiten dieser Lamellen sind zu diesem Zweck vorzugsweise mit einer lichtabsorbierenden Oberfläche versehen, während die Unterseiten mit einer das zur Übertragung dienende Lichtspektrum reflektierenden Oberfläche versehen sein können. Der Raum vor den Empfangsdioden ist außerdem zweckmäßigerweise von trichterförmig nach innen verengten Schirmblechen umgeben, die zumindest die beiden senkrechten Seiten begrenzen. Diese Schirmbleche können ebenfalls lichtabsorbierend wirken und mit Schlitzen zur Halterung der erwähnten Lamellen versehen sein. Außerdem kann in diesen Schirmblechen eine an sich bekannte optische Anordnung gehalten sein, welche das einfallende Infrarotlicht zu den Empfangsdioden hin sammelt. Die Vorderfront des Gehäuses wird zweckmäßigerweise mit einer für Infrarotlicht durchlässigen Scheibe, z. B. aus Kunststoff abgedeckt, so daß sie auf einfache Weise zu reinigen ist.

Die Erfindung wird nachfolgend an einem Ausführungsbeispiel näher erläutert. Es zeigen

Fig. 1 bis 3 eine erfindungsgemäße Sendeund Empfangseinrichtung in Seitenansicht - (teilweise geschnitten), in Vorderansicht und in Draufsicht,

Fig. 4 eine Draufsicht auf die Einrichtung gemäß den vorangehenden Figuren nach Entfernung des Gehäuseoberteils.

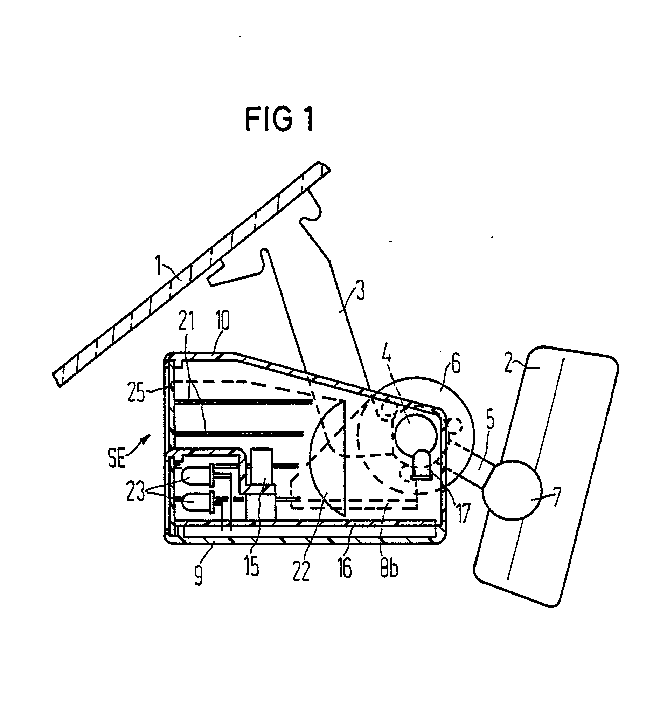

In den Fig. 1 bis 3 ist eine erfindungsgemäße Sende-und Empfangseinrichtung zusammen mit der Befestigung im Fahrzeug gezeigt. Dabei ist das Gehäuse der Sende-und Empfangseinrichtung in Fig. 1 in verschiedenen senkrechten Ebenen geschnitten dargestellt, um die räumliche Zuordnung der einzelnen Sender-und Empfängereinrichtungen in verschiedenen Gehäusebereichen zu zeigen. Soweit diese Teile in Fig. 1 einander überschneiden bzw. durch die Befestigungseinrichtung teilweise verdeckt werden, ist ihre genaue Lage und Anordnung in den übrigen Figuren zu erkennen.

Die Sende-und Empfangseinrichtung ist, wie aus Fig. 1 erkennbar wird, in einem Fahrzeug zwischen einer Frontscheibe 1 und einem Innenrückspiegel 2 angeordnet, wobei ein für den Innenrückspiegel vorgesehener Haltearm 3 am Ende eine Haltekugel 4 aufweist, an welche ein Adapterarm 5 über eine nur andeutungsweise gezeigte Klemmvorrichtung 6 angeklemmt ist. Der Adapterarm 5 besitzt eine der Haltekugel 4 in der Größe entsprechende Adapterkugel 7, die den Spiegel 2 trägt.

Über die Klemmvorrichtung 6 ist ein Haltewinkel 8 an der Haltekugel 4 festgeklemmt, dessen senkrechter Schenkel 8a parallel zur Fahrzeuglängsachse und dessen waagrechter Schenkel 8b parallel zur Erdoberfläche ausgerichtet sind. Auf diesem Haltewinkel ist die Sende-und Empfangseinrichtung SE befestigt.

Das Gehäuse der Sende-und Empfangseinrichtung besteht aus einem Unterteil 9 und einem Oberteil 10, die in üblicher Weise miteinander verbunden, beispielsweise verschraubt sind. Das Gehäuse ist asymmetrisch ausgebildet und bildet auf einer Seite einen Empfängerbereich 11 mit einer verhältnismäßig großen Gehäusetiefe und auf der anderen Seite einen Senderbereich 12 mit einer geringeren Gehäusetiefe. Durch die Abschrägung der Rückseite 13 des Senderbereichs 12, die im Mittelbereich des Gehäuses beginnt und in der Darstellung zur rechten Seite hin verläuft, wird diese geringere Raumtiefe erzeugt. Beim Einbau in das Fahrzeug liegt dieser Senderbereich mit der geringeren Gehäusetiefe auf der Seite des Fahrzeugführers, so daß auf diese Weise der erwünschte Schwenkbereich für den Spiegel 2 zum Fahrzeugführer hin gewährleistet ist.

In der Mitte zwischen dem Empfängerbereich 11 und dem Senderbereich 12 besitzt das Gehäuse zusätzlich eine Einsenkung 14, die zur Befestigung an dem Haltewinkel 8 und zur Unterbringung eines Anschlußsteckers 15 dient.

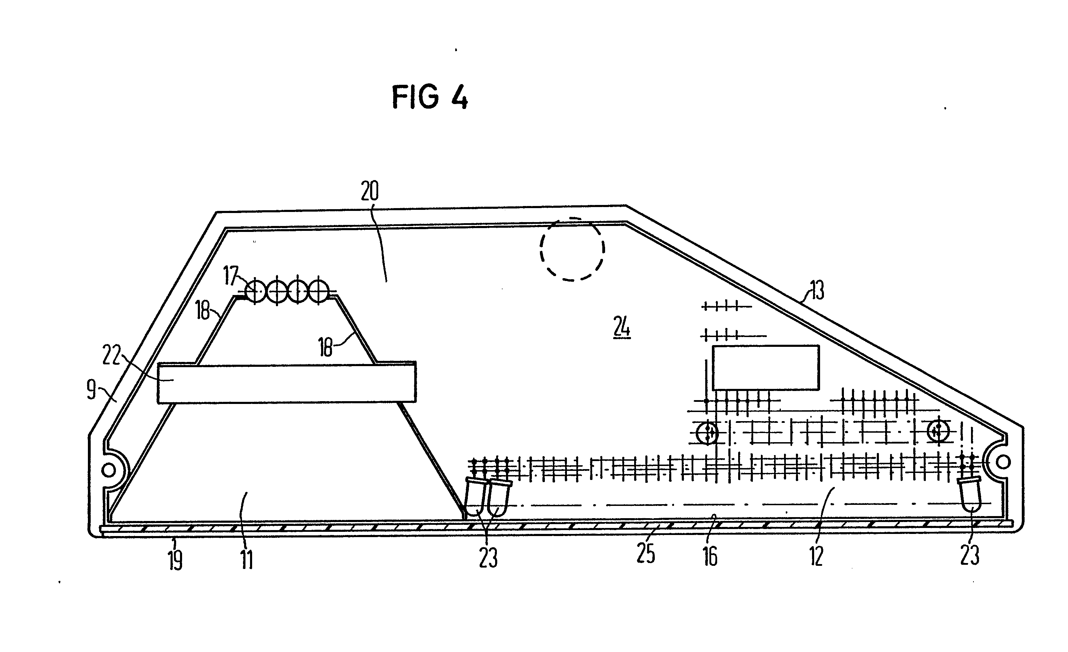

Fig. 4 zeigt den Innenaufbau der Sende-und Empfangseinrichtung, wie er nach der Abnahme des Gehäuseoberteils 10 sichtbar wird. Die einzelnen Teile der Sende-und Empfangseinrichtung sind auf einer Leiterplatte 16 angeordnet, die sich über den gesamten Innenraum des Gehäuses erstreckt und an dessen Innenkontur angepaßt ist. Im Empfangsbereich, d. h., in Fig. 4 links von der Gehäusemitte, sind Empfangsdioden 17 in der Nähe der Gehäuserückseite auf der Leiterplatte 16 in einer Reihe befestigt. Der Raum vor diesen Empfangsdioden 17 ist durch seitliche Schirmbleche 18 begrenzt, wobei sich diese Abschirmung zur Frontseite 19 des Gehäuses hin trichterförmig erweitert, um so die von außen kommende Infrarotstrahlung unter einem möglichst großen Einfallswinkel zu erfassen. Diese Schirmbleche 18 dienen gleichzeitig zur Abschirmung der elektronischen Bauelemente, die im Bereich 20 neben und hinter den Empfangsdioden 17 auf der Leiterplatte angeordnet sind.

Um schräg von oben einfallendes Sonnenlicht möglichst nicht zu den Empfangsdioden 17 gelangen zu lassen, sind in dem Bereich vor den Empfangsdioden waagrecht liegende Lamellen 21 angeordnet (siehe auch Fig. 1), die auf nicht näher dargestellte Weise in Schlitzen der Schirmbleche 18 gehalten sind. Diese Lamellen 21 können auf ihren Oberseiten mit einer lichtabsorbierenden Oberfläche versehen sein, während ihre Unterseiten eine reflektierende Oberfläche aufweisen können, um das einfallende Infrarotlicht zu den Empfangsdioden 17 hin zu reflektieren. Außerdem ist in dem Bereich vor den Empfangsdioden 17 eine Sammeloptik in Form eines Kreisbogenprismas 22 angeordnet, welches ebenfalls durch die Schirmbleche 18 gehalten wird.

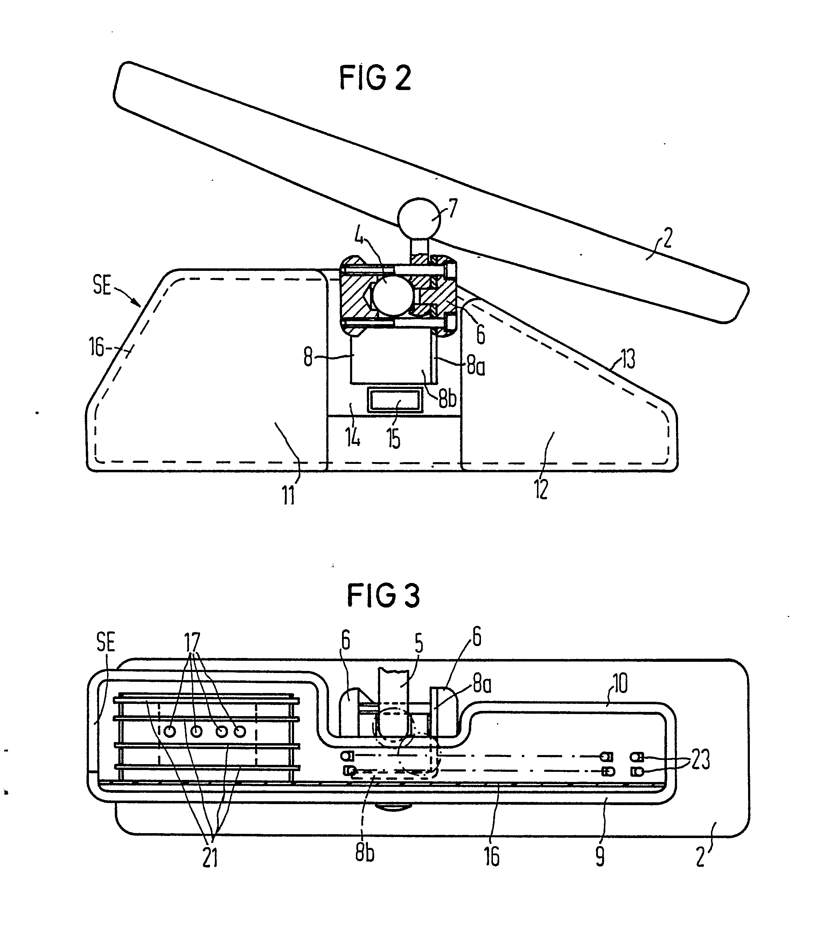

In dem in den Fig. 2 bis 4 rechts dargestellten Sendeteil 12 ist eine größere Anzahl von Sendedioden 23 unmittelbar an der Frontseite 19 angeordnet. Wie bei den Empfangsdioden würde theoretisch auch eine einzige Sendediode ausreichen, doch muß üblicherweise eine größere Anzahl von solchen Dioden verwendet werden, um genügend Sendeleistung übertragen zu können. Die Sendedioden 23 sind im dargestellten Beispiel in zwei Reihen übereinander angeordnet, mit ihren Anschlüssen jedoch alle auf der gemeinsamen Leiterplatte 16 befestigt und kontaktiert. Bei Bedarf könnten auch mehrere solche Reihen von Sendedioden vorgesehen werden. Um eine Abstrahlung der Informationen nach zwei verschiedenen Richtungen, beispielsweise zu zwei an beiden

Straßenrändern angeordneten Baken, vornehmen zu können, sind die Sendedioden 23 der einen Reihe beispielsweise unter einem bestimmten Winkel nach rechts und die Sendedioden 23 der anderen Reihe entsprechend unter einem ähnlichen Winkel nach links gegenüber der Fahrzeuglängsachse ausgerichtet. Der Bereich 24 hinter den Sendedioden 23 dient zur Aufnahme der übrigen elektronischen Bauelemente für den Sender.

Die Vorderfront 19 des Gehäuses ist zweckmäßigerweise mit einer Scheibe 25 abgedeckt, die für den zur Datenübertragung verwendeten Wellenbereich, also insbesondere für Infrarotlicht, durchlässig ist. Hierfür kommt beispielsweise eine dunkle Kunststoffscheibe in Betracht. Auf diese Weise kann die Frontseite durch einfaches Abwischen jeweils leicht gereinigt werden, um das von den Sendedioden 23 abgestrahlte und das zu den Empfangsdioden 17 eingestrahlte Infrarotlicht gut passieren zu lassen. Im übrigen ist das Gehäuse mit abgerundeten Kanten versehen, um eine Verletzungsgefahr bei Unfällen auszuschließen. Wie aus Fig. 3 außerdem ersichtlich ist, wird die Kontur des Gehäuses 9, 10 weitgehend durch die Kontur des Spiegels 2 überdeckt, so daß das Gesichtsfeld des Fahrers kaum beeinträchtigt wird.

## Ansprüche

1. Sende-und Empfangseinrichtung für die Informationsübertragung mittels Lichtstrahlung zum Einbau hinter der Frontscheibe (1) eines Fahrzeuges, wobei in einem gemeinsamen Gehäuse (9, 10) Sende-und Empfangsdioden (17, 23) mit Strahlungsrichtung zu einer lichtdurchlässigen Frontwand (25) angeordnet sind, **dadurch gekennzeichnet,** daß das Gehäuse (9, 10) mit einer im wesentlichen gerade verlaufenden Frontseite (19) und einer asymmetrisch mit unterschiedlichem Abstand zur Frontseite verlaufenden Rückseite (13) zwei nebeneinander liegende Bereiche unterschiedlicher Tiefe bildet, daß in dem Bereich (11) mit der größeren Tiefe die Empfangsdioden (17) in der Nähe der Gehäuserückseite angeordnet sind und daß in dem Bereich (12) mit der geringeren Tiefe die Sendedioden (23) in der Nähe der Gehäusefrontseite (19) angeordnet sind.

2. Einrichtung nach Anspruch 1, **dadurch gekennzeichnet,** daß der die Sendedioden (23) enthaltende Gehäuseteil (12) vom Mittelbereich zur Außenseite hin im wesentlichen kontinuierlich abgeschrägt ist.

3. Einrichtung nach Anspruch 1 oder 2, **dadurch gekennzeichnet,** daß die Sendedioden - (23) in zwei oder mehr übereinander liegenden Reihen angeordnet und mit ihren Anschlüssen auf einer gemeinsamen Leiterplatte befestigt sind.

4. Einrichtung nach Anspruch 3, **dadurch gekennzeichnet,** daß die Sendedioden (23) einer Reihe jeweils einen gemeinsamen Abstrahlwinkel besitzen, wobei jede Reihe einen anderen Abstrahlwinkel gegenüber der Fahrzeuglängsachse besitzt.

5. Einrichtung nach einem der Ansprüche 1 bis 4, **da durch gekennzeichnet,** daß die Sendedioden (23), die Empfangsdioden (17) und die weiteren Bauelemente der Sende-und der Empfangsschaltung auf einer gemeinsamen, der Gehäuse-Innenkontur angepaßten Leiterplatte (16) angeordnet sind.

6. Einrichtung nach einem der Ansprüche 1 bis 5, **dadurch gekennzeichnet,** daß im Bereich vor den Empfangsdioden (17) mehrere parallele, im wesentlichen waagerecht angeordnete Lamellen - (21) angeordnet sind.

7. Einrichtung nach einem der Ansprüche 1 bis 6, **dadurch gekennzeichnet,** daß im Bereich vor den Empfangsdioden (17) zumindest an beiden Seiten jeweils Schirmbleche (18) vorgesehen sind, welche von der Frontseite (19) zu den Empfangsdioden (17) hin trichterförmig aufeinander zu verlaufen.

8. Einrichtung nach Anspruch 7, **dadurch gekennzeichnet,** daß die Schirmbleche (18) jeweils Schlitze zur Halterung der Lamellen (21) aufweisen.

9. Einrichtung nach Anspruch 7, **dadurch gekennzeichnet,** daß die Schirmbleche (18) Ausnehmungen zur Halterung einer Sammeloptik, insbesondere einer Linse (22) in Form eines Kreisbogenprismas, aufweisen.

10. Einrichtung nach einem der Ansprüche 1 bis 9, **dadurch gekennzeichnet,** daß die Frontseite (19) mit einer durchgehenden, für Infrarotlicht durchlässigen Frontscheibe (25) abgedeckt ist.

11. Einrichtung nach einem der Ansprüche 1 bis 10, **dadurch gekennzeichnet,** daß das Gehäuse (9, 10) im Mittelbereich eine Einkerbung - (14) zur Aufnahme von Befestigungs-und Anschlußelementen (7, 15) aufweist.

# FIG 1

## FIG 2

## FIG 3

FIG 4

0 235 678

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-A-3 248 544  (SIEMENS) <br> * Seite 11, Zeile 26 - Seite 12, Zeile 29; Figuren 6,7 * <br><br> ----- | 1 | G 08 G   1/09 |

| RECHERCHIERTE SACHGEBIETE (Int. Cl.4) |
|---|
| G 08 G <br> B 60 R |

Der vorliegende Recherchenbericht wurde für alle Patentansprüche erstellt.

| Recherchenort | Abschlußdatum der Recherche | Prüfer |
|---|---|---|
| DEN HAAG | 09-06-1987 | SGURA S. |

EPA Form 1503 03 82